# EUROPEAN PATENT APPLICATION

(11) **EP 2 466 333 A1**
(43) Date of publication of application: **20.06.2012**
(21) Application number: 10195012.9
(22) Date of filing: 14.12.2010
(51) Int. Cl.: G01S 17/02, G01S 17/10

(54) **A method of performing a laser based radar measurement, a system and a computer program product**

(71) Applicant: Nederlandse Organisatie voor Toegepast -Natuurwetenschappelijk Onderzoek TNO, 2628 VK Delft (NL)
(72) Inventor: Van den Heuvel, Johannes Cornelis, 2652 GC Berkel en Rodenrijs (NL)
(74) Representative: Jansen, Cornelis Marinus

(57) **Abstract**

The invention relates to a method of performing a laser based radar measurement. The method comprises the steps of illuminating a scene by transmitting a high power laser pulse generated by a laser device, and receiving a reflected high power laser pulse. The illuminating step is performed in dependence of an optical measurement executed for detecting the presence of any object within a predetermined range from the laser device.

## Description

The present invention relates to a method of performing a laser based radar measurement, comprising the steps of illuminating a scene by transmitting a high power laser pulse generated by a laser device, and receiving a reflected high power laser pulse.

Laser based radar measurement equipments represent a serious threat for eye damage, both for persons being illuminated by the laser, as well as for persons operating such equipment. In particular, laser radiation in the (near) visible spectrum is focused by the eye on the retina, thus potentially causing damage to the retina. Outside the visible spectrum, laser radiation may damage the cornea. In this respect it is noted that even a single high power pulse may deprive the eye's functionality. In order to comply with safety standards, the optical output of the lasers is limited, thereby in practice also limiting employment of laser based radar measurement equipments.

As an example, both laser range finders and laser target designators are limited in range or are used in training and operation conditions wherein people wear protecting goggles. Further, in gated viewing applications, the illuminating laser device is limited in range and in wavelength due to eye hazard.

It is an object of the invention to obtain a method according to the preamble wherein at least one of the disadvantages is reduced. In particular, the invention aims at obtaining a method according to the preamble wherein the limitation of the optical laser output is reduced while the risk of eye damage remains very low. Thereto, according to the invention, the illuminating step is performed in dependence of an optical measurement executed for detecting the presence of any object within a predetermined range from the laser device.

By first executing an optical measurement, it can be verified if an object, such as a person, is present within a predetermined range from the laser device. Then, the illuminating step can be performed in dependence of the optical measurement outcome, so that damage to the eye of any person in said range can be counteracted.

The invention is at least partially based on the insight that a laser beam has a finite aperture, and is thus diverging. Due to the diverging aspect of the beam, the optical power spatially distributes upon propagating towards the scene. After a certain propagation distance, the local optical power is reduced to an acceptable level wherein the chance of eye damage is low. By allowing transmission of the high power laser pulse only if no objects are detected in the predetermined range, in principle, no severe eye damage may occur. Advantageously, a high power pulse signal can then be used to scan the scene for providing high performance radar reflection signals, while, on the other hand, a risk of eye damage practically remains zero.

According to a further insight, the wavelength of the high power laser pulse can be chosen independent from any eye sensitivity, since, in principle, no eye is exposed to high power laser pulses. By using a high power laser pulse having a wavelength in a range from circa 0.8 micron to circa 1.0 micron, a high quality face recognition can in principle be performed, especially compared to 1.5 micron radiation that is used in prior art systems and that is absorbed by human skin.

In a preferred embodiment, the illuminating step is only performed if no object is detected in the predetermined range from the laser device. In an alternative embodiment, the power of the high power laser pulse is set based on the distance between the laser device and an object detected in the optical measurement, so that damage to the eye of a detected person can be counteracted. Then, the laser pulse power can be modulated to a level that generates no substantial harm to the eye of the person that is detected on the above-mentioned distance between the laser device and the person.

The invention also relates to a system for performing a laser based radar measurement.

Further, the invention relates to a computer program product. A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet.

Other advantageous embodiments according to the invention are described in the following claims.

By way of example only, embodiments of the present invention will now be described with reference to the accompanying figures in which
Fig. 1 shows a block scheme of a system according to the invention;
Fig. 2 shows a schematic view of the system in Fig. 1 in a field; and
Fig. 3 shows a flow chart of an embodiment of a method according to the invention.

It is noted that the figures show merely a preferred embodiment according to the invention. In the figures, the same reference numbers refer to equal or corresponding parts.

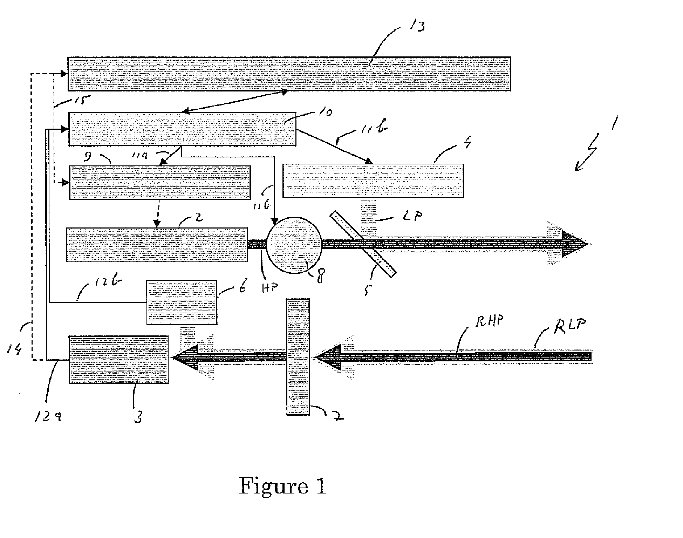

Figure 1 shows a block scheme of a system 1 according to the invention. The system 1 includes a laser device, also called main laser 2, for illuminating a scene by transmitting a high power laser pulse HP. The system 1 also includes a receiver 3 for receiving a reflected high power laser pulse RHP. The receiver 3 can be implemented as an optical detector or a camera that is sensitive to the high power laser pulse wavelength. Further, the system 1 is arranged for transmitting the high power laser pulse only after executing an optical measurement for detecting the presence of any object within a predetermined range from the main laser 2, and under the condition that no object is detected in said predetermined range.

The system is provided with a separate laser device 4 for transmitting a low power laser pulse LP. Further, the system 1 includes an optic system 5, in the shown embodiment implemented as a beam combiner, such that the low power laser pulse LP spatially overlaps the high power laser pulse HP. The system 1 also includes a separate receiver 6 for receiving any reflected low power laser pulse RLP to perform the above-mentioned optical measurement. The system 1 includes a receiver optic unit 7 for receiving the reflected high /low power laser pulse HLP / RLP and transmitting the pulse towards the receiver 3 and/or the separate receiver 6.

In an alternative embodiment of the system 1 according to the invention, the main laser 2 generates both the high power laser pulse HP and the lower power laser pulse LP. It is noted that the receiver 3 can also be arranged for receiving the reflected lower power laser pulse RLP.

The system 1 as shown in Fig. 1 also includes a shutter 8 for mechanically or optically blocking transmission of high power laser pulses HP from the main laser 2. Alternatively, the system 1 can be implemented without a shutter 8 provided that the main laser 2 is arranged for operating only in a desired way depending on the outcome of the above-mentioned optical measurement, to avoid eye damage to persons within the predetermined range.

The main laser 2 is operated by a laser trigger 9. Further, the system 1 includes a control unit 10 for controlling transmission high power laser pulses and low power laser pulses for performing the optical measurement. In particular, the control unit 10 controls the laser trigger 9 via a first control line 11a, the separate laser 4 via a second control line 11b, and the shutter 8 via a third control line 11c. Electronic signals that are generated by the receiver 3 and the separate receiver 6 are fed to the control unit 10 via receiver lines 12a, b.

In addition, the system 1 includes an operating unit 13 controlling the general operation of the system 1. Thereto, the electronic signals that are generated by the receiver 3 are also input to the operating unit 13 via a further receiver line 14. Also the laser trigger 9 is fed by the electronic signals that are generated by the receiver 3, via an additional receiver line 15.

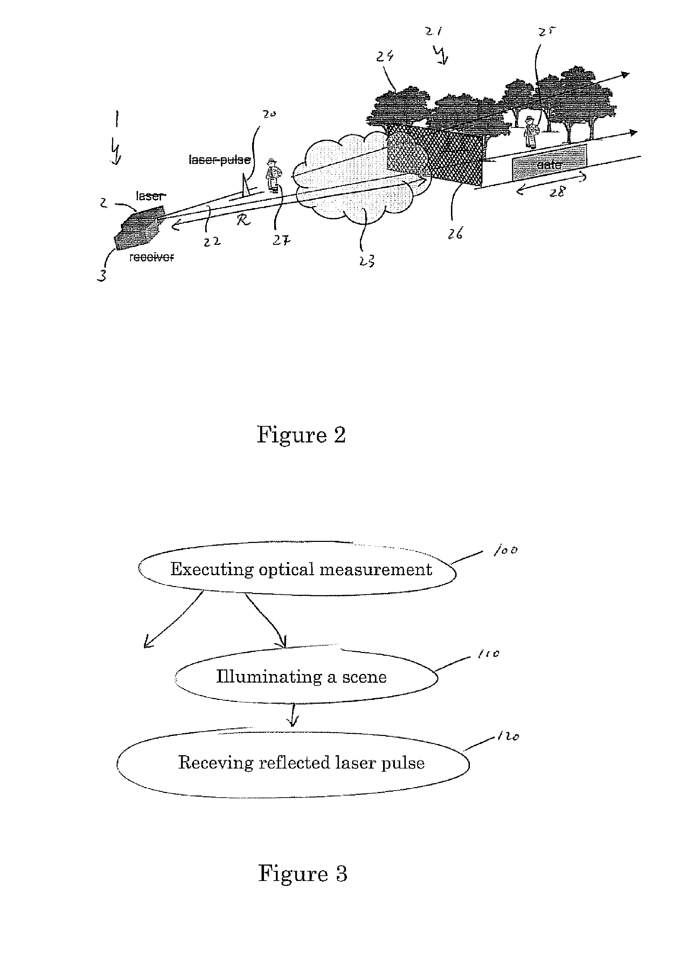

The operation of the system 1 according to the invention is explained referring to Fig. 2 showing a schematic view of the system in Fig. 1 in a field. For illustrative purposes, the system 1 is merely represented by the main laser 2 and the receiver 3.

During operation, the main laser 2 transmits a high power laser pulse 20 for illuminating a scene 21. The pulse 20 is symbolically shown as a peak signal 20 that is spatially limited to a diverging laser beam 22, e.g. having an aperture of circa 8 mrad. In principle, each object located in the laser beam 22 generates a reflected high power laser pulse RHP that can, in principle, be received by the receiver 3, thereby providing a laser based radar signal, so that an image can be generated representing a scene 21, e.g. composed of trees 24 and/or persons 25, also if the scene 21 is not directly visible due to the presence of a radar penetrable structure, such as a cloud 23.

In a specific embodiment according to the invention, the step of receiving a reflected high power laser pulse is performed in a pre-set time window after transmission of the high power laser pulse, so that a so-called gated viewing application is obtained. Here, an image is obtained that is related to a pulse travel window corresponding to a desired gate width in the scene 21.

Preferably, the wavelength of the high power laser pulse is in a range from circa 0.8 micron to circa 1.0 micron, so that a relatively good face recognition is possible. However, also other wavelengths can be applied, e.g. circa 1.5 micron providing excellent retro-reflection of human eyes.

The system 1 is arranged such that the illuminating step is performed only after executing an optical measurement for detecting the presence of any object within a predetermined range R from the laser device 2, and under the condition that no object is detected within said predetermined range R.

The range R can be chosen such that it extends a certain distance to a certain border 26 from the main laser 2 that is symbolically shown in Fig. 2. Within said range the high power laser pulse 20 is harmful for eye tissue. Behind said range R, the high power laser pulse is in principle not harmful for human eyes, due to the laser beam divergence. Then, the predetermined range from the laser device substantially coincides with an eye-hazardous region in view of operating conditions of the laser device. Apparently, the above-mentioned condition can not be applied exactly to a range dimension. However, safety standards can be used here. Further, safety zones can be incorporated in the process of determining the range distance.

In order to perform the step of executing an optical measurement for detecting the presence of any object within a predetermined range, the additional laser 4 transmits a low power laser pulse. Then, the additional optical receiver 6 is activated. Further, it is checked whether a reflected pulse RLP is received within a time window corresponding to the predetermined range, depending on the travel time of a pulse propagating from the system 1 towards the border 26 and back to the system 1, hence twice the range R. If no reflected pulse RLP is received within said time window, no reflecting object is present within said range. Then, it is safe to illuminate the scene with the high power laser pulse. If, however, a person 27 is present within said range R, a reflected low power pulse RLP is detected, so that no high power pulse will be transmitted, thereby avoiding that the person 27 who is present in the range will be harmed. The output of the laser 3 is then blocked by the shutter 8 and/or the laser's output is electronically blocked. In this context it is noted that the low power laser pulse is eye-safe but strong enough to enable short range object detection within said range R. The low power laser pulse wavelength can be in the order of the high power laser pulse wavelength, e.g. 0.9 micron. However, if the low power laser pulse wavelength is in the near infrared region, optimal retro-reflection of the human is obtained, thereby optimizing recognizing human beings.

In this context it is further noted that the reflected pulse is assumed to be generated by a person who is present in the predetermined range and in the beam of the low power laser pulse. Preferably, any measured reflected pulse is filtered to filter out reflections that are not due to persons. As an example, ground reflections or reflections by small objects such as leafs are preferably filtered out, so that operation of the laser based radar measurement is not hindered by objects that do not suffer from the high power laser pulse. The filtering process can e.g. be performed by using thresholding the reflection pulse or by analyzing the shape or reflection energy of the reflected pulse. Such a filtering process can be performed in either a digital or analogue domain.

In order to enhance the safety of the system, the illuminating step is preferably performed within a time period after the optical measurement has completed, wherein the time period is shorter than circa ten milliseconds, preferably shorter than circa 5 milliseconds, e.g. 1 millisecond or less, so that a chance that a person comes into the range, suffering a potential risk of being illuminated by a high power laser pulse, is almost zero.

By spatially overlapping the high power laser pulse by the low power laser pulse it is guaranteed that any person within the range can be detected by using the low power laser pulse.

In a specific embodiment of the invention, the step of illuminating the scene is repeated in dependence of a further optical measurement executed for detecting the presence of any object within a predetermined range from the laser device, preferably after again verifying that no object is present within said predetermined range from the laser device. In fact, a quasi continuous radar measurement can be obtained of the repeating cycle is relatively small. In another embodiment, the system is used for scanning the scene, e.g. in a wide field setting, in a passive way, i.e. without actively illuminating the scene. Optionally, a device for amplifying the brightness of the image can be used, e.g. a phosphor plate. If necessary, the operator of the system may select a specific zone of the scene and apply a gated viewing modus, also called range viewing, as explained above to obtain a more detailed view.

In a specific application, the system can be used for directing the high power laser pulse to an object for designating purposes, also called laser designation, or for measuring a distance towards an object reflecting the high power laser pulse, also called laser distance measuring, e.g. for computing artillery data.

It is noted that the system according to the invention can not only be used in defence systems, but also in civil applications, such as in a night glass system.

Figure 3 shows a flow chart of an embodiment of the method according to the invention. The method is used for performing a laser based radar measurement. The method comprises the step of illuminating 110 a scene by transmitting a high power laser pulse generated by a laser device, and a step of receiving 120 a reflected high power laser pulse. Further, the method comprises the step of executing 100 an optical measurement for detecting the presence of any object within a predetermined range from the laser device. The step of executing 100 an optical measurement is performed prior to the illumination step 110. In addition, the illumination step 110 is only performed under the condition that no object is detected in said predetermined range.

The method of performing a laser based radar measurement can be executed using dedicated hardware structures, such as FPGA and/or ASIC components. Otherwise, the method can also at least partially be performed using a computer program product comprising instructions for causing a processor of a computer system or a control unit to perform the above described steps of the method according to the invention. All steps can in principle be performed on a single processor. However it is noted that at least one step can be performed on a separate processor, e.g. the step of deciding whether the illumination step is allowed to be performed based on the outcome of the optical measurement.

It will be understood that the above described embodiments of the invention are exemplary only and that other embodiments are possible without departing from the scope of the present invention. It will be understood that many variants are possible.

As an example, the principle of transmitting and receiving a low power laser pulse can be replaced by another optical measurement for detecting the presence of any object within a predetermined range from the laser device, e.g. a camera based system including objection recognition software.

Further, for safety reasons, the system can be arranged such that it becomes only operational if the main laser is directed towards an adjacently located object and it is verified that said object is detected by the optical measurement process.

Such variants will be apparent to the person skilled in the art and are considered to fall within the scope of the invention as defined in the following claims.

## Claims

1. A method of performing a laser based radar measurement, comprising the steps of:
- illuminating a scene by transmitting a high power laser pulse generated by a laser device, and
- receiving a reflected high power laser pulse,
wherein the illuminating step is performed in dependence of an optical measurement executed for detecting the presence of any object within a predetermined range from the laser device.

2. A method according to claim 1, wherein the illuminating step is performed only under the condition that no object is detected in said predetermined range.

3. A method according to claim 1, wherein the power of the high power laser pulse is set based on the distance between the laser device and an object detected in the optical measurement.

4. A method according to any of the preceding claims, wherein the step of executing an optical measurement for detecting the presence of any object within a predetermined range includes the steps of:
- transmitting a low power laser pulse;
- activating an optical receiver, and
- checking whether a reflected pulse is received within a time window corresponding to said predetermined range.

5. A method according to any of the preceding claims, wherein the step of receiving a reflected high power laser pulse is performed in a pre-set time window after transmission of the high power laser pulse.

6. A method according to any of the preceding claims, wherein the wavelength of the high power laser pulse is in a range from circa 0.8 micron to circa 1.0 micron.

7. A method according to any of the preceding claims, wherein the predetermined range from the laser device substantially coincides with an eye-hazardous region in view of operating conditions of the laser device.

8. A method according to any of the preceding claims, wherein the step of illuminating the scene is repeated in dependence of a further optical measurement executed for detecting the presence of any object within a predetermined range from the laser device.

9. A method according to any of the preceding claims, wherein the illuminating step is performed within a time period after the optical measurement has completed, and wherein the time period is shorter than circa ten milliseconds.

10. A method according to any of the preceding claims 2-9, wherein the low power laser pulse spatially overlaps the high power laser pulse.

11. A method according to any of the preceding claims 2-9, wherein the low power laser pulse wavelength is either in the order of the high power laser pulse wavelength or in the near infrared region.

12. A system for performing a laser based radar measurement, comprising a laser device for illuminating a scene by transmitting a high power laser pulse, and a receiver for receiving a reflected high power laser pulse, wherein the system is arranged for performing the illuminating step in dependence of an optical measurement executed for detecting the presence of any object within a predetermined range from the laser device.

13. A system according to claim 12, further comprising a separate laser device for transmitting a low power laser pulse and/or a separate receiver for receiving any reflected low power laser pulse to perform the optical measurement.

14. A system according to claim 12 or 13, further comprising a control unit for controlling transmission high power laser pulses and low power laser pulses for performing the optical measurement.

15. A computer program product for performing a laser based radar measurement, the computer program product comprising computer readable code for causing a processor to perform the steps of:
- illuminating a scene by transmitting a high power laser pulse generated by a laser device,
- receiving a reflected high power laser pulse,
wherein the illuminating step is performed in dependence of an optical measurement executed for detecting the presence of any object within a predetermined range from the laser device.
